# EUROPÄISCHE PATENTANMELDUNG

(11) **EP 2 520 921 A2**
(43) Veröffentlichungstag der Anmeldung: **07.11.2012**
(21) Anmeldenummer: 12002960.8
(22) Anmeldetag: 27.04.2012
(51) Int. Cl.: G01M 17/04

(54) **Verfahren zur Diagnose eines Funktionszustands einer Komponente eines aktiven Fahrwerks eines Kraftwagens**

(30) Priorität: 04.05.2011 DE 102011100313
(71) Anmelder: Audi AG, 85045 Ingolstadt (DE)
(72) Erfinder: Bär, Michael, 85049 Ingolstadt (DE)

(57) **Zusammenfassung**

Die Erfindung betrifft ein Verfahren zur Diagnose eines Funktionszustands einer Komponente eines aktiven Fahrwerks eines Kraftwagens, bei welchem mittels eines Fahrwerksaktors eine vorgegebene Kraft auf das Fahrwerk ausgeübt wird und eine in Abhängigkeit von der Kraft variierende Zustandsgröße der Komponente gemessen wird. Das erfindungsgemäße Verfahren ermöglicht eine Selbstdiagnose des Fahrwerkszustands auch außerhalb eines speziellen Prüfstands, so dass Schäden frühzeitig erkannt werden können.

## Beschreibung

Die Erfindung betrifft ein Verfahren zur Diagnose eines Funktionszustands einer Komponente eines aktiven Fahrwerks eines Kraftwagens.

Die korrekte Funktion von Fahrwerkskomponenten, insbesondere von Dämpfern des Fahrwerks, ist von großer Bedeutung für Fahrkomfort und Fahrsicherheit. Dämpfer mit verringerter Leistungsfähigkeit können nicht nur die Spurstabilität des Fahrzeugs beeinträchtigen, sondern auch dessen Bremsweg verlängern. Da die Leistungsfähigkeit von Dämpfern oftmals graduell verloren geht, ist dies für den Fahrer eines Kraftwagens nicht immer unmittelbar erkennbar. Der Verlust an Dämpferleistung wird daher üblicherweise nur in der Werkstatt bemerkt, wo das korrekte Verhalten der Dämpfer auf einem entsprechenden Prüfstand gemessen werden kann.

Sind im Fahrzeug Sensoren vorhanden, über welche Betriebsparameter des Fahrwerkes abgefragt werden können, so ist es möglich, diese zur Fahrwerksdiagnose einzusetzen. Ein derartiges Verfahren ist beispielsweise aus der EP 1 565 719 B1 bekannt. Mittels eines Höhenstandssensors, der die relative Höhe eines Kraftwagenaufbaus zur Fahrbahn misst, wird hier das Schwingungsverhalten des Dämpfers beobachtet. Die Anregung des Dämpfers erfolgt dabei durch Fahrbahnunebenheiten oder dergleichen. Da die Anregung in diesem Fall im Wesentlichen zufallsbestimmt ist, kann mittels dieses Verfahrens kein genau definierter Zustand des Dämpfers hergestellt werden, so dass die Diagnose des Funktionszustands des Dämpfers nur mit eingeschränkter Zuverlässigkeit erfolgen kann.

Der vorliegenden Erfindung liegt somit die Aufgabe zugrunde, ein Verfahren der eingangs genannten Art bereitzustellen, welches eine schnelle und kostengünstige Diagnose eines Funktionszustands einer Fahrwerkskomponente ermöglicht.

Diese Aufgabe wird durch ein Verfahren mit den Merkmalen des Patentanspruchs 1 gelöst.

Bei einem derartigen Verfahren zur Diagnose eines Funktionszustands einer Komponente eines aktiven Fahrwerks eines Kraftwagens wird mittels eines Fahrwerksaktors eine vorgegebene Kraft auf das Fahrwerk ausgeübt und eine in Abhängigkeit von der Kraft variierende Zustandsgröße der Komponente gemessen. Durch eine derartige aktive Anregung kann beispielsweise ein Dämpfer des Fahrwerks komprimiert und in der Folge sein Ausschwingverhalten gemessen werden. Durch die aktive Anregung ist es dabei möglich, einen definierten Zustand des Fahrwerks herzustellen und die Reaktion des Fahrwerks auf den so eingestellten Zustand kontrolliert zu beobachten. Dies ermöglicht auf einfachste Art eine besonders präzise Diagnose des Funktionszustands der Fahrwerkskomponenten, die außerhalb einer Werkstatt im Normalbetrieb des Kraftwagens regelmäßig durchführbar ist. Eventuelle Schäden an Fahrwerkskomponenten können so zeitnah zu ihrem ersten Auftreten festgestellt werden, so dass eine Reparatur möglicht ist, bevor möglicherweise eine Beeinträchtigung der Fahrsicherheit auftritt.

Bei einer besonders zweckmäßigen Ausführungsform der Erfindung ist die gemessene Zustandsgröße ein Höhenstand eines Dämpfers des Fahrwerks. Sensoren zur Ermittlung eines solchen Höhenstands, also der Relativlage zwischen Fahrzeugaufbau und Fahrbahnniveau, sind in üblichen aktiven Fahrwerken ohnehin bereits vorhanden, so dass das erfindungsgemäße Verfahren ohne Modifikationen am Fahrwerk selbst durchführbar ist. Dies ermöglicht eine besonders kostengünstige Fahrwerksdiagnose.

Bei einer weiteren bevorzugten Ausführungsform der Erfindung wird die vorgegebene Kraft über einen ersten vorgegebenen Zeitraum ausgeübt und anschließend der zeitliche Verlauf der Zustandsgröße für einen zweiten vorgegebenen Zeitraum gemessen. Aus einer derartigen Ausschwingkurve eines Feder-Dämpfer-Systems des Fahrwerks können alle wesentlichen Informationen über den Fahrwerkszustand gewonnen werden. Beispielsweise ermöglicht eine solche Messung die Bestimmung von Eigenfrequenzen, Federkonstanten und Dämpferkonstanten des Fahrwerks, was einen zuverlässigen Rückschluss auf den Fahrwerkszustand ermöglicht.

Bei einer besonders bevorzugten Ausführungsform der Erfindung wird das Verfahren bei Stillstand des Kraftwagens durchgeführt. Hierdurch kann sichergestellt werden, dass keine unerwünschten externen Anregungskomponenten auf das Fahrwerk wirken, welche die Qualität der Fahrwerksdiagnose verschlechtern könnten.

Vorzugsweise wird das Verfahren in regelmäßigen Zeitabständen und/oder bei Auftreten zumindest eines vorgegebenen Betriebszustands des Kraftwagens durchgeführt. Beispielsweise ist es möglich, die Fahrwerksdiagnose bei jedem Fahrzeugstart durchzuführen, so dass ein Fahrer des Kraftwagens vor dessen Benutzung informiert werden kann, ob sich das Fahrwerk seines Kraftwagens in einem optimalen Zustand befindet oder gegebenenfalls Wartungsarbeiten erforderlich macht.

Im Folgenden wird die Erfindung in einer bevorzugten Ausführungsform anhand der Zeichnung näher erläutert.

Es zeigen:

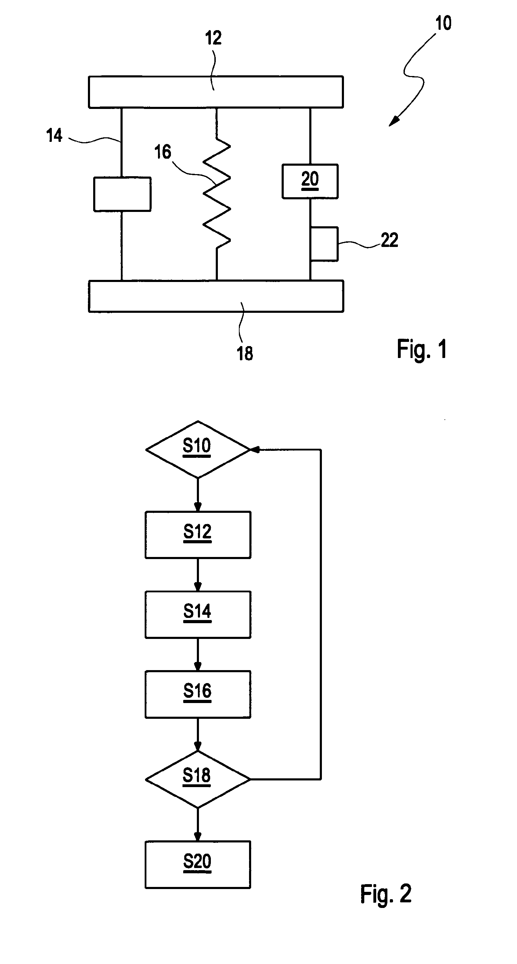

- Fig. 1: eine schematische Darstellung eines Fahrwerks eines Kraftwagens und
- Fig. 2: ein Ablaufdiagramm für ein Ausführungsbeispiel eines erfindungsgemäßen Verfahrens zur Diagnose eines Fahrwerkszustands.

In einem im Ganzen mit 10 bezeichneten aktiven Fahrwerk eines Kraftwagens ist ein Kraftwagenaufbau 12 über einen Dämpfer 14 sowie eine Feder 16 mit einem Rad 18 des Kraftwagens verbunden. Aufgrund von Fahrbahnunebenheiten über das Rad 18 eingebrachte Energie wird von der Feder 16 aufgenommen und durch den Dämpfer 14 dissipiert. Ferner ist ein Aktor 20 vorgesehen, mittels welchem eine Relativlage zwischen Aufbau 12 und Rad 18 aktiv eingestellt werden kann. Dies kann beispielsweise zur Erhöhung der Bodenfreiheit in einem Geländebetriebsmodus des Kraftwagen dienen oder auch im Straßenbetrieb des Kraftwagens Anwendung finden, um Wankbewegungen des Kraftwagens aktiv zu kompensieren und so die Fahrstabilität erhöhen.

Beschädigungen an Komponenten des Fahrwerks 10, insbesondere am Dämpfer 14 können zu einer Verschlechterung der Straßenlage sowie zu einer Verlängerung des Bremsweges des Kraftwagens führen und müssen daher frühzeitig erkannt werden. Um eine Diagnose des Fahrwerkszustands auch außerhalb einer Werkstatt zu ermöglichen, kann der Aktor 20 Verwendung finden, um das schwingende System aus Dämpfer 14 und Feder 16 kontrolliert anzuregen. Mittels eines Höhensensors 22, der die Relativlage zwischen Aufbau 12 und Rad 18 misst, kann dieses Schwingungsverhalten beobachtet werden.

Hierzu wird in einem ersten Verfahrensschritt S10 geprüft, ob die notwendigen Randbedingungen zur Durchführung einer solchen Fahrwerksdiagnose gegeben sind. Insbesondere ist es hierbei zweckmäßig zu prüfen, ob das Fahrzeug im Stillstand ist, da nur so unerwünschte externe Anregungen von Feder 16 und Dämpfer 14 vermieden werden können. Auch eine Prüfung, ob sich das Fahrzeug auf einer ebenen Fläche befindet, kann zweckmäßig sein. Ist dies der Fall, so wird im Verfahrensschritt S12 mittels des Aktors 20 eine vorgegebene Kraft auf das Fahrwerk 10 ausgeübt, also der Aufbau 12 gegenüber dem Rad 18 um einen vorgegebenen Höhenbetrag ausgelenkt. Diese Auslenkung führt zum Auftreten einer gedämpften Schwingung des Systems aus Dämpfer 14 und Feder 16, die im Verfahrensschritt S14 mittels des Höhensensors 22 beobachtet wird.

Aus der so aufgenommenen gedämpft-harmonischen Schwingungskurve können im Schritt S16 wesentliche Zustandgrößen der Fahrwerkskomponenten 14, 16 abgeleitet werden. Insbesondere kann aus der Stärke des Abfalls der Amplitude der so angeregten Schwingung eine Dämpfungskonstante des Dämpfers 14 bestimmt werden. Auch weitere Zustandsgrößen des Fahrwerks 10, wie beispielsweise die Federkonstante der Feder 16 oder deren Eigenfrequenz können aus dieser Messung abgeleitet werden.

Im Verfahrensschritt S18 erfolgt dann eine Prüfung, ob die so bestimmten Zustandsgrößen sich im Rahmen jeweils vorgegebener Sollwerte-Bereiche bewegen. Ist dies nicht der Fall, so wird von einer Beschädigung einer Fahrwerkskomponente ausgegangen und im Schritt S20 eine entsprechende Warnung, beispielsweise eine Wartungsanforderung für den Fahrer des Kraftwagens, generiert. Andernfalls wird zum Schritt S10 zurückgekehrt, und das Verfahren pausiert solange, bis wieder eine Fahrwerksdiagnose notwendig wird. Auf die beschriebene Art und Weise können Schäden am Fahrwerk 10 frühzeitig erkannt werden, noch bevor sie möglicherweise ein Problem für die Fahrsicherheit darstellen könnten.

## Patentansprüche

1. Verfahren zur Diagnose eines Funktionszustands einer Komponente eines aktiven Fahrwerks eines Kraftwagens, bei welchem mittels eines Fahrwerksaktors eine vorgegebene Kraft auf das Fahrwerk ausgeübt wird und eine in Abhängigkeit von der Kraft variierende Zustandsgröße der Komponente gemessen wird.

2. Verfahren nach Anspruch 1,
**dadurch gekennzeichnet, dass**
die gemessene Zustandsgröße ein Höhenstand eines Dämpfers ist.

3. Verfahren nach Anspruch 1 oder 2,
**dadurch gekennzeichnet, dass**
die vorgegebene Kraft über einen ersten vorgegebenen Zeitraum ausgeübt und anschließend der zeitliche Verlauf der Zustandsgröße gemessen wird.

4. Verfahren nach einem der Ansprüche 1 bis 3,
**dadurch gekennzeichnet, dass**
das Verfahren bei Stillstand des Kraftwagens durchgeführt wird.

5. Verfahren nach einem der Ansprüche 1 bis 4,
**dadurch gekennzeichnet, dass**
das Verfahren in regelmäßigen Zeitabständen und/oder bei Auftreten zumindest eines vorgegebenen Betriebszustands des Kraftwagens durchgeführt wird.
